# EUROPEAN PATENT APPLICATION

(11) **EP 2 549 316 A1**
(43) Date of publication of application: **23.01.2013**
(21) Application number: 11174463.7
(22) Date of filing: 19.07.2011
(51) Int. Cl.: G02B 6/44

(54) **Fibre organizer tray**

(71) Applicant: Tyco Electronics Raychem BVBA, 3010 Kessel-Lo (BE)
(72) Inventor: Vandepoel, Jos, 3545 Halen (BE); Collart, Stephane, 2250 Olen (BE); Schurmans, Eric, 3450 Hogen-Geetbets (BE)
(74) Representative: Patentanwaltskanzlei WILHELM & BECK

(57) **Abstract**

A fibre organizer tray (100) comprises a case (200), said case comprising a bottom plate (210), said bottom plate comprising an elevated base section (300), said base section comprising a guide slot (310), said guide slot being adapted for holding and guiding a tab (410).

## Description

The present invention relates to a fibre organizer tray according to the preamble of claim 1, to a method for assembling a fibre organizer tray according to claim 11 and to a method for installing an optical fibre in a fibre organizer tray according to claim 12.

Optical fibres are known to be delicate and easily damageable. Optical fibres must not be folded or bent beyond a minimal bending radius. Installation of optical fibres in the field often requires the handling of a large number of optical fibres and the splicing of the ends of optical fibres to each other. These procedures often have to be carried out under restricted spatial conditions. It is therefore necessary to organize and fixate the optical fibres in an easy and reliable manner.

Fibre organizer trays are known in the state of the art and are commonly used for holding a plurality of fibres. Conventional fibre organizer trays comprise a plurality of tab elements moveably or immoveably arranged between a bottom part and a top part of the fibre organizer tray. Optical fibres can be arranged below these tab elements. If immoveable tab elements are pre-assembled in the conventional fibre organizer trays, inserting the fibres is often difficult and time-consuming.

It is an object of the present invention to provide an improved fibre organizer tray which allows for an easier fixation of optical fibres. This objective is achieved by means of a fibre organizer tray according to claim 1. It is a further object of the present invention to provide a method for assembling a fibre organizer tray. This objective is achieved by a method according to claim 11. It is a further object of the present invention to provide a method for installing an optical fibre in a fibre organizer tray. This objective is achieved by a method according to claim 12. Preferred embodiments are disclosed in the dependent claims.

A fibre organizer tray according to the invention comprises a case, said case comprising a bottom plate, said bottom plate comprising an elevated base section, said base section comprising a guide slot, said guide slot being adapted to hold and guide a tab. Advantageously, this fibre organizer tray allows for the insertion of the tab after one or more fibres have been organized in the fibre organizer tray, thereby simplifying installation of the optical fibres.

In a preferred embodiment of the fibre organizer tray, said guide slot is adapted for holding said tab moveably in a direction parallel to said bottom plate. Advantageously, the fibre organizer tray then also allows for arranging the tab in a first position before inserting the optical fibres into the fibre organizer tray and then moving the tab to a second position for holding the optical fibres in the fibre organizer tray.

In one embodiment of the fibre organizer tray, said base section is disc-shaped, wherein said guide slot is radially arranged in said base section. Advantageously, one or more optical fibres can then be wound around the disc-shaped base section.

Preferably, said guide slot is adapted to hold said tab in such a way that a portion of the tab projects beyond said base section. Advantageously, the tab may then hold an optical fibre that is wound around the base section.

In an particularly preferred embodiment of the fibre organizer tray, a latch element is arranged in said guide slot for preventing said tab from being removed from the guide slot. Advantageously, the latch element then prevents accidental removal of the tab from the guide slot, thereby preventing difficulties during installation of the optical fibres.

It is preferable that the guide slot comprises a first guide rail and a second guide rail and that the fibre organizer tray further comprises the tab, wherein the tab comprises a first dovetail for engaging with said guide rails when said tab is arranged in said guide slot. Advantageously, the dovetail of the tab and the guide rails of the guide slot then form a dovetail slide for holding the tab moveably in the guide rail.

According to a further development of the fibre organizer tray, said tab comprises a second dovetail arranged consecutively with said first dovetail. Advantageously, the two dovetails provide a robust dovetail slide.

In one embodiment of the fibre organizer tray, said tab comprises an oblong section and a pointed section, wherein said pointed section points towards the centre of said base section when said tab is arranged in said guide slot.

In a preferred embodiment of the fibre organizer tray, said tab comprises a corrugated section on a surface of said tab.

Advantageously, the corrugated section provides a gripping portion for moving the tab in the guide rail, thereby making the handling of the fibre organizer tray more convenient.

According to a further development of the fibre organizer tray, said base section comprises a plurality of guide slots for holding and guiding a plurality of clamps. Advantageously, the fibre organizer tray is then suitable for holding a large number of optical fibres. The fibre organizer tray may e.g. be suitable for holding and organizing sixteen optical fibres.

According to the invention, a method for assembling a fibre organizer tray comprises a step of inserting a tab into a guide slot arranged in case of a fibre organizer tray. Advantageously, this method can be performed during production of the fibre organizer tray.

According to the invention, a method for installing an optical fibre in a fibre organizer tray comprises a first step for installing an optical fibre into a fibre organizer tray and a second step for inserting a tab into a guide slot arranged in a case of said fibre organizer tray.

It is preferred that said optical fibre and said tab are installed such that said tab holds said optical fibre in said fibre organizer tray.

The invention will now be explained in more detail with reference to the Figures, in which:
Figure 1 shows a perspective view of a fibre organizer tray;
Figure 2 shows an enlarged view of a portion of the fibre organizer tray;
Figure 3 shows a rear view of the fibre organizer tray;
Figure 4 shows a cross-section of the fibre organizer tray; and
Figure 5 shows a top view of the fibre organizer tray.

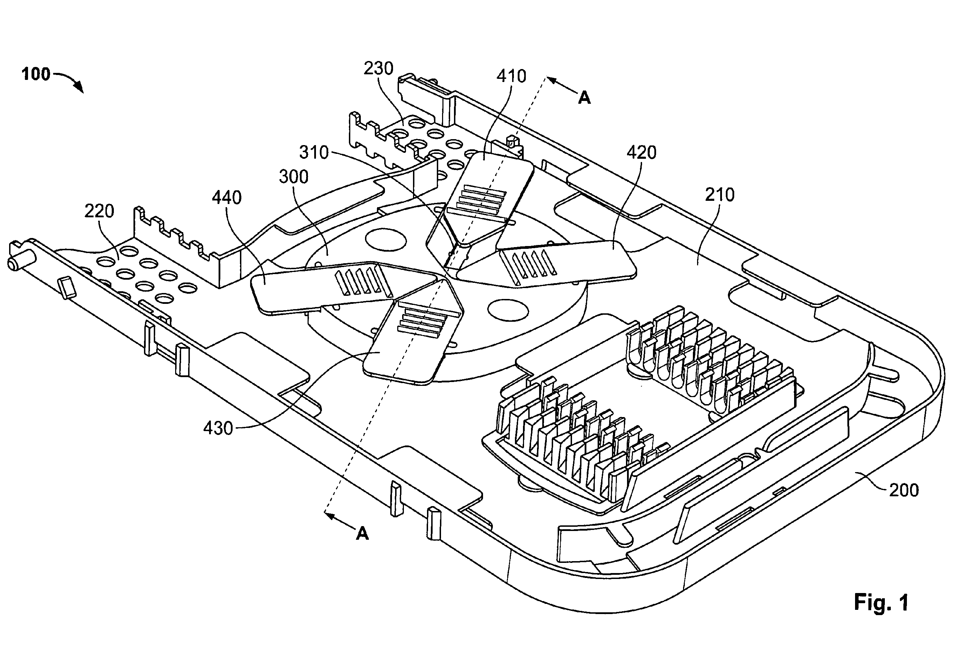

Figure 1 shows a perspective view of a fibre organizer tray 100. The fibre organizer tray 100 is designed for holding one or more optical fibres. The fibre organizer tray 100 comprises a case 200. The fibre organizer tray 100 may also comprise a cover for covering and closing the case 200. The cover is not depicted in the Figures.

The case 200 of the fibre organizer tray 100 comprises a first port 220 for feeding optical fibres into the case 200 and a second port 230 for guiding the optical fibres out of the case 200. The first port 220 and the second port 230 may of course be used vice versa, as well.

The case 200 comprises an essentially plane bottom plate 210. The bottom plate 210 comprises an elevated base section 300 with the shape of a short cylinder with an approximately circular cross-section. The upper surface of the base section 300 is parallel to the plane of the bottom plate 210 and elevated above the plane of the bottom plate 210. In the example depicted in Figure 1, the upper surface of the base section 300 is approximately circular. The upper surface of the base section 300 may, however, be elliptical, rectangular or of any other geometric shape.

The base section 300 comprises a first guide slot 310. The first guide slot 310 is designed as a cut-out in the upper surface of the base section 300 and extends radially between a first end located near the centre of the upper surface of the base section 300 and a second end located near the circumference of the upper surface of the base section 300.

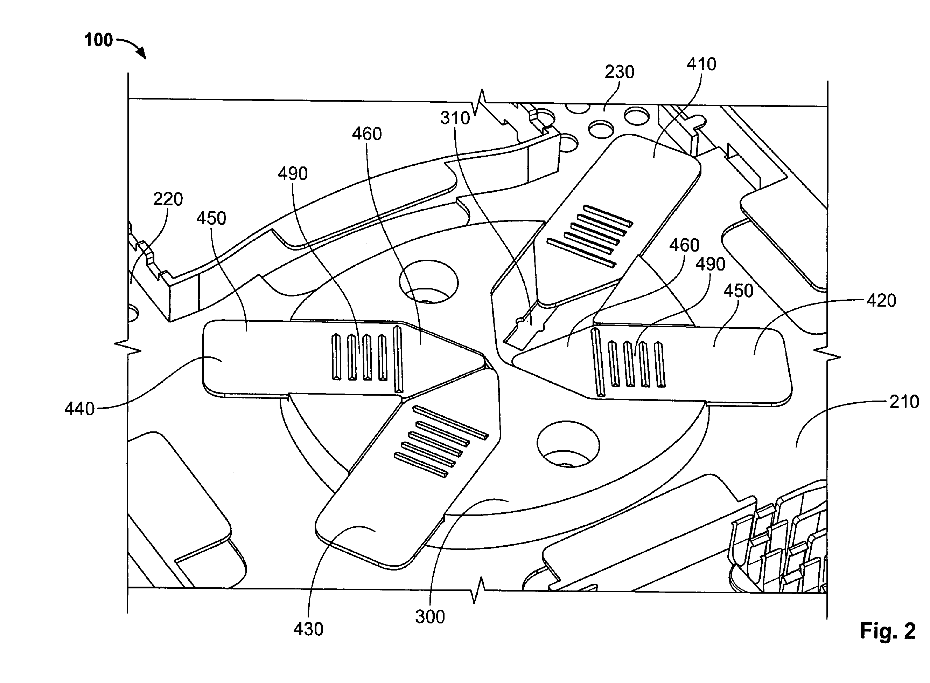

Figure 2 shows an enlarged view of the base section 300 of the fibre organizer tray 100. From Figure 2, it can be understood that in addition to the first guide slot 310, the base section 300 comprises a second guide slot 320, a third guide slot 330 and a fourth guide slot 340, even if these additional guide slots 320, 330, 340 are not visible in Figures 1 and 2.

The guide slots 320, 330, 340 are commensurate with the first guide slot 310, but are rotated around the centre of the upper surface of the base section 300 by approximately 90°, respectively. The first guide slot 310 and the second guide slot 320 include an angle of slightly less than 90°. The third guide slot 330 and the fourth guide slot 340 also include an angle of slightly less than 90°. The second guide slot 320 and the third guide slot 330, as well as the fourth guide slot 340 and the first guide slot 310, include an angle which is slightly larger than 90°, respectively. The base section 300 may also comprise fewer or more than four guide slots 310, 320, 330, 340.

A first tab 410 is held by the first guide slot 310. A second tab 420 is held by the second guide slot 320. A third tab 430 is held by the third guide slot 330. A fourth tab 440 is held by the fourth guide slot 340.

Each of the clamps 410, 420, 430, 440 comprises an oblong section 450 and a pointed section 460. The pointed section 460 of each tab 410, 420, 430, 440 points towards the centre of the upper surface of the base section 300. The oblong section 450 and the pointed section 460 of each tab 410, 420, 430, 440 is arranged above the upper surface of the base section 300. The oblong section 450 of each tab 410, 420, 430, 440 comprises a corrugated section 490 that may serve as a gripping portion for a human finger for making handling of the clamps 410, 420, 430, 440 more convenient.

The clamps 410, 420, 430, 440 are slidably held in the guide slots 310, 320, 330, 340. Each tab 410, 420, 430, 440 can be moved in a radial direction of the base section 300 between an inner position and an outer position. In Figures 1 and 2, the first tab 410 is arranged in the outer position. The second tab 420, the third tab 430 and the fourth tab 440 are arranged in their inner positions. The clamps 410, 420, 430, 440 can also take intermediate positions between the inner position and the outer position.

A radially outwards-facing part of the oblong section 450 of each tab 410, 420, 430, 440 projects beyond the base section 300 in both the inner position and the outer position of the clamps 410, 420, 430, 440. In the outer position of the clamps 410, 420, 430, 440, the projecting part is larger than in the inner position of clamps 410, 420, 430, 440. The projecting portions of the clamps 410, 420, 430, 440 are suitable for holding one or more optical fibres that are wound around the base section 300. Clamps 410, 420, 430, 440 do not necessarily need to project beyond the base section 300 in their inner positions at all.

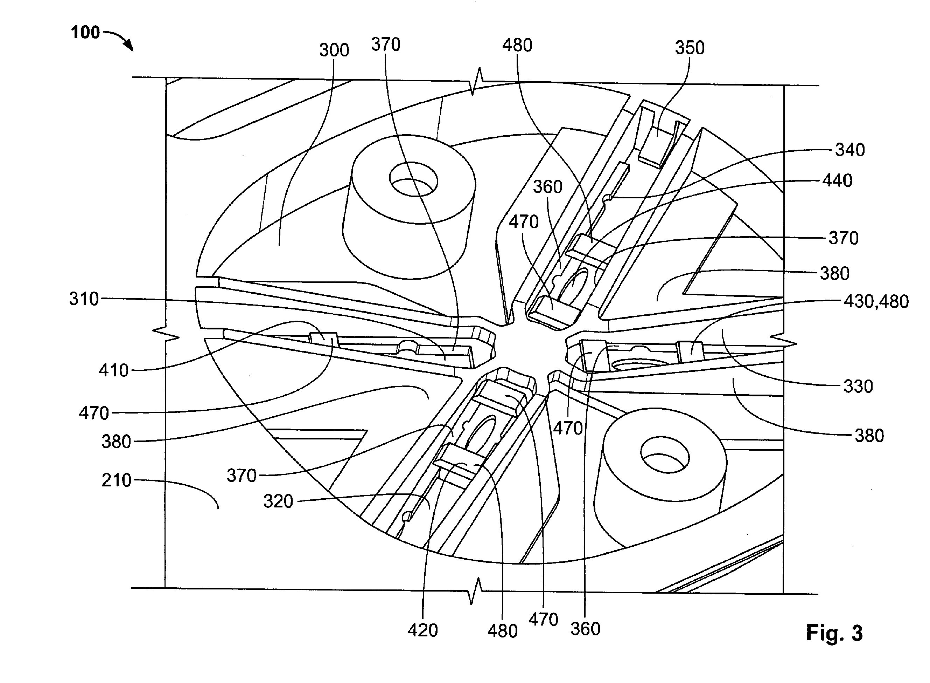

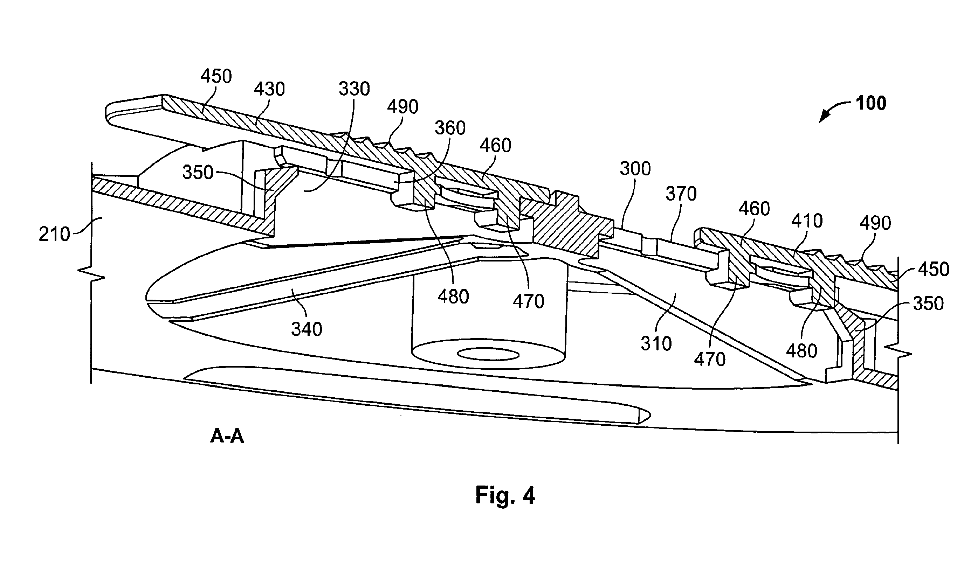

Figure 3 shows a rear view of the base section 300 of the case 200 of the fibre organizer tray 100. Figure 4 shows a sectional view of the fibre organizer tray 100 along line A-A indicated in Figure 1.

Figure 3 shows the first guide slot 310, the second guide slot 320, the third guide slot 330 and the fourth guide slot 340 with the first tab 410, the second tab 420, the third tab 430 and the fourth tab 440 held therein, respectively. Each of the guide slots 310, 320, 330, 340 comprises a first guide rail 360 and a second guide rail 370. The guide rails 360, 370 are arranged along the two long sides of each guide slot 310, 320, 330, 340. Each tab 410, 420, 430, 440 comprises a first dovetail 470 and a second dovetail 480 arranged one after another along the longitudinal directions of the clamps 410, 420, 430, 440. The dovetails 470, 480 and the guide rails 360, 370 form dovetail slides 380 that slidably hold the clamps 410, 420, 430, 440 in the guide slots 310, 320, 330, 340.

Each guide slot 310, 320, 330, 340 is provided with a latch element 350 arranged at an radially outer end of the respective guide slot 310, 320, 330, 340. Figure 4 shows that the latch elements 350 prevent the clamps 410, 420, 430, 440 from being removed from the guide slots 310, 320, 330, 340. In the outer position of the first tab 410, the latch element 350 of the first guide slot 310 is in contact with the second dovetail 480 of the first tab 410, thereby preventing the first tab 410 from being removed from the first guide slot 310. For removing the first tab 410 from the first guide slot 310, it is necessary to push down the latch element 350 with a suitable tool. Advantageously, this cannot happen accidentally.

Inserting the first tab 410 into the first guide slot 310, in contrast, is easy since the latch element 350 is shaped in such a manner that the first dovetail 470 of the first tab 410 will push down the latch element 350 upon insertion of the first tab 410 into the first guide slot 310.

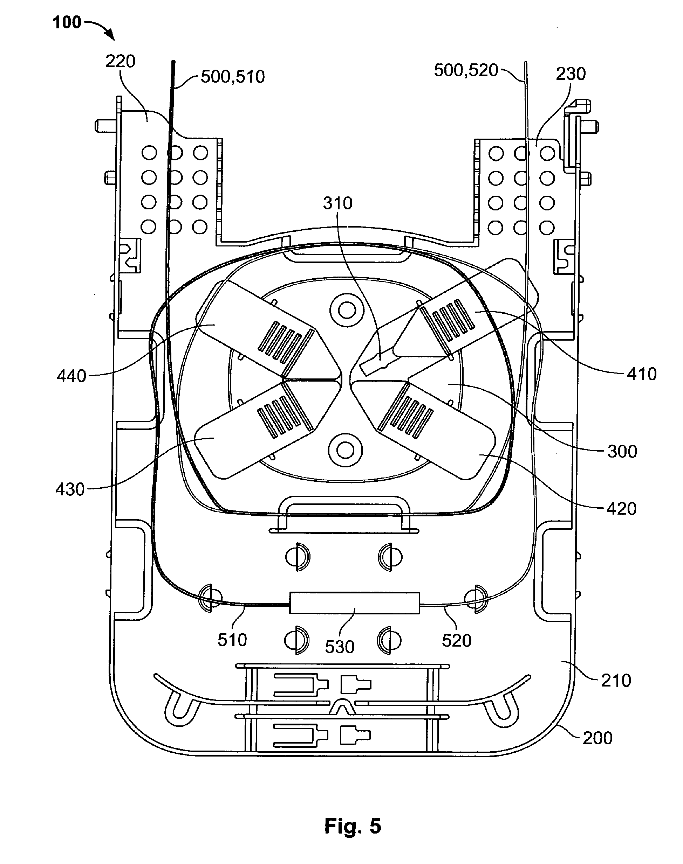

Figure 5 shows a top view of the fibre organizer tray 100 with an optical fibre 500 arranged in the fibre organizer tray 100. The optical fibre comprises a first fibre portion 510 and a second fibre portion 520. The first fibre portion 510 and the second fibre portion 520 are spliced to each other in a splice section 530.

The first fibre portion 510 enters the fibre organizer tray 100 via the first port 220. From the first port 220, the first fibre portion 510 of the fibre 500 winds around the base section 300. The second fibre portion 520 of the optical fibre 500 enters the fibre organizer tray 100 via the second port 230 and winds around the base section 300 in clockwise direction. The splice section 530 connecting the first fibre portion 510 and the second fibre portion 520 is arranged inside the fibre organizer tray 100.

The section of the first fibre portion 510 that is wound around the base section 300 and the section of the second fibre portion 520 that is wound around the base section 300 are both held by the first tab 410 that is arranged in its radially outer position in the first guide slot 310. The second tab 420, the third tab 430 and the fourth tab 440 are shown in their inner positions but could be moved to their respective outer positions to also participate in holding the optical fibre 500.

Installation of the optical fibre 500 into the fibre organizer tray 100 can be carried out in several ways. One possibility is to first wind the fibre 500 around the base section 300 before inserting the clamps 410, 420, 430, 440 into the guide slots 310, 320, 330, 340. This method is supported by the simplicity of inserting the clamps 410, 420, 430, 440 into the guide slots 310, 320, 330, 340. Another possibility is to first insert the clamps 410, 420, 430, 440 into the guide slots 310, 320, 330, 340 and arrange the clamps 410, 420, 430, 440 in their respective inner positions. Then the optical fibre 500 is organized in the fibre organizer tray 100 and then the clamps 410, 420, 430, 440 are slid to their respective outer positions to hold the optical fibre 500. This method is supported by the fact that the clamps 410, 420, 430, 440 are secured against accidental removal from the guide slots 310, 320, 330, 340 while the optical fibre 500 is being organized in the fibre organizer tray 100. This second method constitutes the preferred way of installation.

The fibre organizer tray 100 is designed to hold a plurality of optical fibres, not only one optical fibre 500 as shown in Figure 5. The fibre organizer tray 100 may e.g. be used to organize and hold sixteen optical fibres.

### Reference symbols

- 100: fiber organizer tray
- 200: case
- 210: bottom plate
- 220: first port
- 230: second port
- 300: base section
- 310: first guide slot
- 320: second guide slot
- 330: third guide slot
- 340: fourth guide slot
- 350: latch element
- 360: first guide rail
- 370: second guide rail
- 380: dovetail slide
- 410: first tab
- 420: second tab
- 430: third tab
- 440: fourth tab
- 450: oblong section
- 460: pointed section
- 470: first dovetail
- 480: second dovetail
- 490: corrugated section
- 500: fiber
- 510: first fiber portion
- 520: second fiber portion
- 530: splice section

## Claims

1. A fibre organizer tray (100)
comprising a case (200),
said case (200) comprising a bottom plate (210), said bottom plate (210) comprising an elevated base section (300),
said base section (300) comprising a guide slot (310),
**characterized in that**
said guide slot (310) is adapted for holding and guiding a tab (410).

2. The fibre organizer tray (100) according to claim 1,
wherein said guide slot (310) is adapted for holding said tab (410) movably in a direction parallel to said bottom plate (210).

3. The fibre organizer tray (100) according to any one of the previous claims,
wherein said base section (300) is disc-shaped, wherein said guide slot (310) is arranged radially in said base section (300).

4. The fibre organizer tray (100) according to any one of the previous claims,
wherein said guide slot (310) is adapted for holding said tab (410) such that a portion of the tab (410) projects beyond said base section (300).

5. The fibre organizer tray (100) according to any one of the previous claims,
wherein a latch element (350) is arranged in said guide slot (310) for preventing said tab (410) from being removed from the guide slot (310).

6. The fibre organizer tray (100) according to any one of the previous claims,
said guide slot (310) comprising a first guide rail (360) and a second guide rail (370),
said fibre organizer tray (100) further comprising the tab (410),
wherein the tab (410) comprises a first dovetail (470) for engaging with said guide rails (360, 370) when said tab (410) is arranged in said guide slot (310).

7. The fibre organizer tray (100) according to claim 6, wherein said tab (410) comprises a second dovetail (480) arranged consecutively with said first dovetail (470).

8. The fibre organizer tray (100) according to any one of claims 6 or 7,
wherein said tab (410) comprises an oblong section (450) and a pointed section (460),
wherein said pointed section (460) points towards the center of said base section (300) when said tab (410) is arranged in said guide slot (310).

9. The fibre organizer tray (100) according to any one of claims 6 to 8,
wherein said tab (410) comprises a corrugated section (490) on a surface of said tab (410).

10. The fibre organizer tray (100) according to any one of the previous claims,
wherein said base section (300) comprises a plurality of guide slots (310, 320, 330, 340) for holding and guiding a plurality of clamps (410, 420, 430, 440).

11. A method for assembling a fibre organizer tray (100),
**characterized in that**
a tab (410, 420, 430, 440) is inserted into a guide slot (310, 320, 330, 340) arranged in case (200) of a fibre organizer tray (100).

12. A method for installing an optical fibre (500) in a fibre organizer tray (100),
**characterized in that**
an optical fibre (500) is installed into a fibre organizer tray (100) in a first step,
and a tab (410, 420, 430, 440) is inserted into a guide slot (310, 320, 330, 340) arranged in a case (200) of said fibre organizer tray (100) in a second step.

13. The method according to claim 12,
wherein said optical fibre (500) and said tab (410, 420, 430, 440) are installed such that said tab (410, 420, 430, 440) holds said optical fibre (500) in said fibre organizer tray (100).
